# DEMANDE DE BREVET EUROPEEN

(11) **EP 2 133 684 A1**
(43) Date de publication de la demande: **16.12.2009**
(21) Numéro de dépôt: 09162490.8
(22) Date de dépôt: 11.06.2009
(51) Int. Cl.: G01N 21/03, G01N 21/35, G01N 33/00, G08B 17/103, G08B 17/117

(54) **Cellule de mesure pour appareil de détection de la présence d'un gaz dans une atmosphère**

(30) Priorité: 11.06.2008 FR 0853880
(71) Demandeur: Oldham, 62027 Arras Cedex (FR)
(72) Inventeur: Fosse, Romain, 62118 Roeux (FR); Gayrard, Olivia, 59650 Villeneuve d'Ascq (FR); Chevalier, Daniel, 62217 Beaurains (FR); Lefebvre, Ludovic, 62000 Dainville (FR)
(74) Mandataire: Jacobson, Claude

(57) **Abrégé**

Cellule de mesure pour appareil de détection de la présence d'au moins un gaz d'une espèce donnée dans une atmosphère, comportant un émetteur de rayonnement infra-rouge et au moins un couloir à parois réfléchissantes dans l'infrarouge conduisant ledit rayonnement à deux éléments récepteurs sensibles munis de filtres optiques, dont un élément de compensation ou de référence et un élément de mesure, et un couvercle coiffant ledit ou lesdits couloir(s) et pourvu d'ouvertures permettant la pénétration de ladite atmosphère dans ledit ou lesdits couloir(s), **caractérisée en ce que** ladite cellule de mesure présente un axe longitudinal de symétrie sur lequel est disposé ledit émetteur, en ce que lesdits deux éléments récepteurs sensibles sont placés de part et d'autre de cet axe et symétriquement par rapport à lui, et en ce que les chemins optiques suivis par les rayonnements parvenant auxdits récepteurs sont de longueurs égales et sont non rectilignes.

## Description

L'invention concerne les cellules de mesure utilisées dans des dispositifs de détection et d'analyse des gaz.

II est connu d'utiliser, pour la détection de la présence de certains gaz (CO₂, hydrocarbures...) dans une atmosphère, des cellules fonctionnant sur le principe suivant. Elles comportent un émetteur de rayonnement infrarouge qui émet son rayonnement à l'intérieur d'une chambre où pénètre l'atmosphère renfermant la ou les substances à détecter. Ce rayonnement parcourt, à travers ladite chambre et dans ladite atmosphère, un chemin optique qui le conduit jusqu'à un détecteur électronique qui analyse le rayonnement qu'il reçoit et déduit de cette analyse la présence ou l'absence du ou des gaz à détecter. De préférence, ce détecteur comporte deux éléments sensibles et leurs électroniques associées. L'un d'entre eux est un élément de compensation ou de référence qui permet d'améliorer la précision de la mesure en compensant, par exemple, les dérives du fonctionnement de l'émetteur, etc.

La mesure de la présence du gaz est possible grâce à la présence de filtres optiques passe-bande dont l'un est actif dans la gamme de longueur d'ondes où le gaz à détecter absorbe le rayonnement infrarouge. La lumière infrarouge est collectée par l'élément sensible de mesure après son passage dans ce filtre.

Pour la mesure de référence, on utilise un filtre optique actif dans une gamme de longueur d'ondes relativement voisine de la précédente, mais où le gaz à détecter n'absorbe pas le rayonnement.

Une telle cellule est décrite par exemple dans le document US-A-2005/0121614. Cette cellule présente la particularité d'imposer au rayonnement infrarouge un parcours sensiblement circulaire, le long d'une grande partie de la périphérie de la chambre ou selon un parcours en spirale ou selon une ligne brisée formée d'éléments parallèles inscrits dans un cercle. Le rayonnement rencontre lors de son parcours une ou plusieurs surface(s) réfléchissante(s) qui l'oriente(nt) vers la partie de la chambre, où se trouve l'élément détecteur. Comme on l'a dit précédemment, dans le cas décrit par ce document, le détecteur comporte deux éléments sensibles et est disposé verticalement ou horizontalement dans la chambre. Le fait d'avoir un parcours circulaire ou spiralé ou en ligne brisée à parties parallèles pour le rayonnement permet de maximiser la longueur du chemin optique parcouru par le rayonnement entre l'émetteur IR et les détecteurs, ce qui est favorable à la précision de la mesure.

Un inconvénient de cette disposition est, cependant, que la grande longueur du chemin optique tend à favoriser une déperdition de l'énergie lumineuse entre émetteur et récepteurs, ce qui va dans le sens contraire de l'augmentation de précision recherchée. D'autres inconvénients de ce type de cellule sont :
- des déformations par dilation irrégulières; cela nuit à la précision de la mesure,
- le fait que les deux éléments récepteurs ne sont pas situés exactement au même niveau par rapport à l'émetteur dans la version à éléments sensibles verticaux;
- plus accessoirement, la disposition de l'émetteur IR au fond d'une chambre ouverte d'un seul côté, qui fait que le rayonnement n'est utilement émis que dans une seule direction, et est donc mal exploité.

Le but de l'invention est de proposer un type de cellule IR pour détection de gaz exempt des principaux inconvénients qui précèdent, et procurant une grande précision à la mesure de la présence des gaz à détecter.

A cet effet, l'invention a pour objet une cellule de mesure pour appareil de détection de la présence d'au moins un gaz d'une espèce donnée dans une atmosphère, comportant un émetteur de rayonnement infra-rouge et au moins un couloir à parois réfléchissantes dans l'infrarouge conduisant ledit rayonnement à deux éléments récepteurs sensibles munis de filtres optiques, dont un élément de compensation ou de référence, et un élément de mesure, et un couvercle coiffant ledit ou lesdits couloir(s) et pourvu d'ouvertures permettant la pénétration de ladite atmosphère dans ledit ou lesdits couloir(s), **caractérisée en ce que** ladite cellule de mesure présente un axe longitudinal de symétrie sur lequel est disposé ledit émetteur, en ce que lesdits deux éléments récepteurs sensibles sont placés de part et d'autre de cet axe et symétriquement par rapport à lui, et en ce que les chemins optiques suivis par les rayonnements parvenant auxdits récepteurs sont de longueurs égales et sont non rectilignes.

Lesdits deux éléments récepteurs sensibles peuvent être placés sur un même récepteur.

Lesdits deux éléments sensibles peuvent être placés sur deux récepteurs différents.

Lesdits chemins optiques peuvent comporter une partie en portion de cercle ou de spirale.

La face interne du capot peut être configurée de manière à réduire progressivement la hauteur dudit ou desdits couloir(s) sur au moins une partie de leur longueur.

Lesdits éléments récepteurs sensibles peuvent être disposés sensiblement horizontalement, et ledit capot présente sur sa face interne au moins une surface oblique renvoyant les rayonnements sur lesdits éléments récepteurs sensibles.

Comme on l'aura compris, les principes de base sur lesquels repose l'invention sont les suivants.

Les parties sensibles des éléments récepteurs sont disposées sur deux organes séparés ou sur deux endroits d'un même organe, et reçoivent chacune des rayonnements IR issus d'un même émetteur, ayant parcouru des chemins optiques distincts, non rectilignes, mais de longueurs très sensiblement égales. Ces récepteurs peuvent être séparés l'un de l'autre par une cloison. L'utilisation de deux détecteurs distincts permet de diminuer l'encombrement en hauteur du capot, donc d'améliorer la compacité du dispositif et de diminuer le volume de gaz nécessaire à son remplissage.

Ces chemins optiques peuvent être constitués chacun d'une succession de parties rectilignes dont les orientations sont déterminées par des parois réfléchissantes. II n'est pas exclu que sur au moins une portion desdits chemins optiques, ce parcours soit sensiblement une portion de cercle ou de spirale comme il l'est dans la majeure partie du parcours de US-A-2005/0121614, mais une telle configuration n'est pas obligatoire.

En tout cas, l'arrangement interne de la cellule présente une symétrie par rapport à un axe de la section longitudinale de la cellule, l'émetteur IR étant placé sur cet axe et les parties sensibles des récepteurs étant placées de part et d'autre de cet axe, à des emplacements symétriques par rapport à lui. C'est à cette condition qu'on assure une absence de déformations thermiques non symétriques de la cellule.

De préférence, le capot perforé recouvrant la cellule a sur sa face interne une configuration telle que, sur au moins une partie des parcours des rayonnements issus de l'émetteur, la distance entre ladite face et le fond de la cellule diminue progressivement de manière à réduire la hauteur du couloir dans lequel circule le rayonnement IR. Cela permet de limiter les déperditions de rayonnement par rapport aux cellules connues présentant un long chemin optique. La précision que l'on perd du fait du raccourcissement des chemins optiques des rayonnements parvenant aux détecteurs est retrouvée, à puissance d'émission de l'émetteur égale, grâce à cette plus faible déperdition. Egalement, un tel capot permet de réduire le volume de l'ensemble, ce qui améliore le temps de réponse de la cellule.

L'identité des longueurs des chemins optiques parcourus par les rayonnements parvenant aux deux éléments détecteurs, du fait de la symétrie totale de la cellule par rapport à l'axe longitudinal sur lequel se trouve l'émetteur, est également un facteur contribuant à une bonne précision de la mesure.

Le fait de ne pas avoir des chemins optiques strictement rectilignes entre l'émetteur et les récepteurs permet de maximiser la longueur desdits chemins optiques pour un encombrement donné de la cellule, et d'obtenir ainsi une meilleure précision de la mesure.

L'invention sera mieux comprise à la lecture de la description qui suit, donnée en référence aux figures annexées suivantes.
- les figures 1 à 3 qui montrent un premier exemple de cellule selon l'invention, ses éléments principaux étant montrés séparément sur les figures 1 (en vue de dessus) et 2 (en perspective), la cellule étant vue en perspective à l'état assemblé sur la figure 3 ;
- les figures 4 à 6 qui montrent de la même façon un deuxième exemple de cellule selon l'invention ;
- les figures 7 et 8 qui montrent séparément les éléments principaux d'un troisième exemple de cellule selon l'invention, vus de dessus (figure 7) et en perspective (figure 8).

On va d'abord décrire un premier exemple de cellule de mesure selon l'invention, dans lequel les rayonnements issus de l'émetteur suivent d'abord chacun dès le départ un chemin optique différent, sensiblement en arc de cercle, avant d'être renvoyés sur les récepteurs, chacun selon un chemin optique rectiligne.

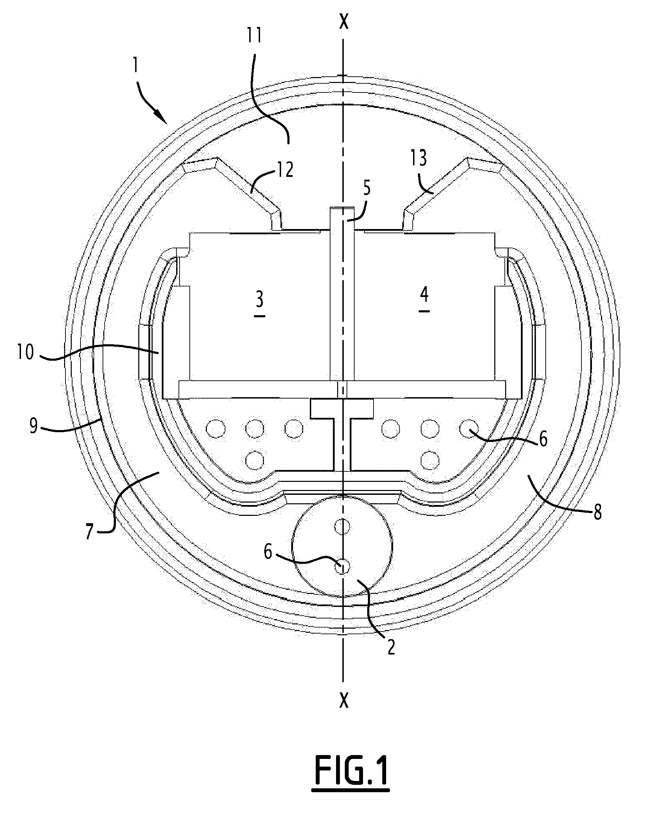

La figure 1 montre en vue de dessus la pièce inférieure 1 de la cellule, dans laquelle on voit le logement 2 de l'émetteur et les logements des deux récepteurs, à savoir le logement 3 du récepteur de référence et le logement 4 du récepteur de mesure 4, chacun de ces récepteurs portant une partie sensible. La pièce inférieure 1 possède un axe de symétrie longitudinal X-X sur lequel est situé le logement 2 de l'émetteur. II va de soi que, du fait de la symétrie de la pièce 1 et de la cellule en général par rapport à cet axe X-X, les positions respectives des logements des récepteurs de référence 3 et de mesure 4 pourraient être inversées par rapport à ce qui vient d'être dit. Dans l'exemple représenté, les deux logements des récepteurs 3, 4 sont séparés l'un de l'autre par une cloison 5 située sur l'axe X-X. Le fond de la pièce inférieure 1 est pourvu de divers orifices 6 qui, de manière classique, permettent de laisser passer les connexions électriques reliant l'émetteur et les récepteurs aux dispositifs électroniques associés pour assurer leur fonctionnement et l'exploitation des données qu'ils reçoivent.

Les rayonnements issus de l'émetteur peuvent se propager dans deux directions initialement opposées, à l'intérieur de « couloirs » 7, 8 définis par des parois internes de la pièce inférieure 1. Ces couloirs 7, 8 sont définis :
- d'une part par la face interne 9 de la paroi externe sensiblement circulaire de la pièce1;
- d'autre part par des parois 10, 11 disposées à l'intérieur de la pièce 1.

L'une 10 de ces parois coopère avec la face interne 9 de la pièce 1 pour définir des couloirs 7, 8 ayant initialement des formes sensiblement en arc de cercle et s'étendant sur des portions de la périphérie interne circulaire de la pièce 1. Dans l'exemple non limitatif représenté, chacun de ces couloirs 7, 8 s'étend sur environ un tiers de cette périphérie.

Le fait que le rayonnement issu de l'émetteur soit exploité dans deux directions d'émission, au lieu d'une comme cela est classiquement le cas, permet de mieux « rentabiliser » ce rayonnement.

Dans l'exemple représenté, les parois 9, 10 sont sensiblement en arcs de cercles sur l'essentiel de leurs longueurs, mais elles pourraient aussi être formées par des successions de portions rectilignes, dont l'ensemble s'approcherait globalement de la forme en arc de cercle montrée en exemple.

L'autre 11 de ces parois a pour fonction d'orienter les rayonnements sortant des couloirs 7, 8 en direction des faces actives des récepteurs. A cet effet, elle comporte deux portions rectilignes 12, 13 fermant les couloirs 7, 8 et orientées chacune, dans l'exemple représenté, sensiblement à 45° par rapport à l'axe X-X et à la face active du récepteur correspondant.

Les largeurs des couloirs 7, 8 sont de préférence, au moins dans leurs parties initiales, de l'ordre du diamètre de l'émetteur. Cette largeur peut éventuellement se réduire progressivement de manière à accentuer la concentration des rayonnements.

Les parois 9, 10, 11 définissant les couloirs 7, 8 sont recouvertes d'un revêtement réfléchissant dans l'infrarouge, par exemple à base d'or, de manière à limiter autant que possible l'absorption des rayonnements parcourant les couloirs 7, 8 par les parois 9, 10, 11.

La pièce inférieure 1 de la cellule est, de préférence, en une matière plastique moulée, telle qu'un polymère à cristaux liquides, qui a l'avantage d'avoir un faible coefficient de dilatation et de procurer une bonne adhérence au revêtement d'or.

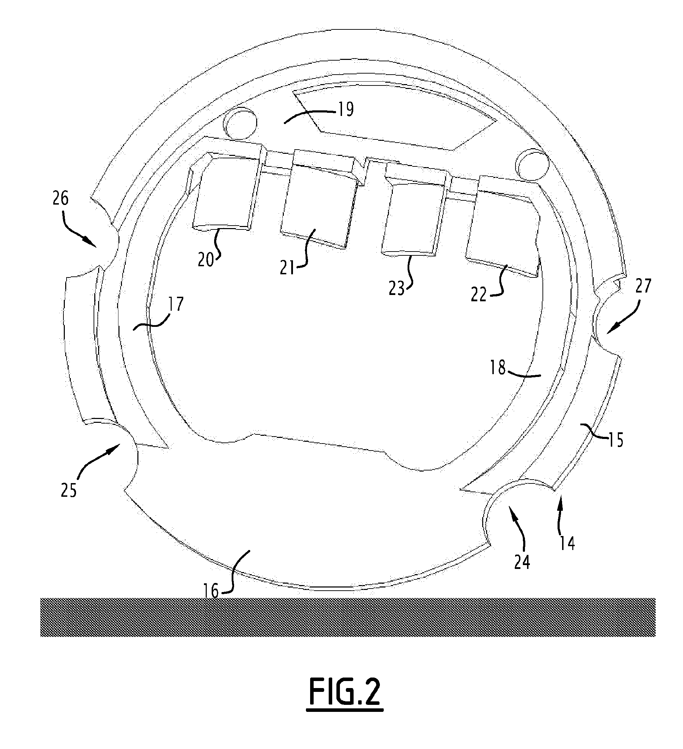

Sur la figure 2 est représentée séparément en perspective une autre pièce essentielle de ce premier exemple de cellule de mesure selon l'invention, qui est le capot 14 qui vient coiffer la pièce inférieure 1 après que l'émetteur et les détecteurs ou récepteurs y ont été installés.

Ce capot 14, classiquement réalisé en un matériau tel qu'un polymère à cristaux liquides (LCP), a pour fonction essentielle de constituer la paroi supérieure délimitant les couloirs 7, 8. Dans l'exemple représenté, il a une forme générale annulaire. Son bord extérieur 15 repose sur la périphérie de la pièce inférieure 1. Une portion 16 coiffe la partie de la pièce inférieure 1 où se trouve le logement 6 de l'émetteur. D'autres portions 17, 18 surplombent les portions sensiblement circulaires des couloirs 7, 8 en venant s'y insérer. On notera que dans l'exemple représenté, et conformément à la variante préférée de l'invention, l'épaisseur de ces portions 17, 18 est croissante à partir de la portion 16 coiffant l'émetteur. Il en résulte que la hauteur des couloirs 7, 8 diminue progressivement entre l'émetteur et les récepteurs correspondants. On obtient ainsi, au niveau des récepteurs, une concentration des rayonnements issus de l'émetteur plus importante que si la hauteur des couloirs 7, 8 était constante sur toute leur longueur. Cela est favorable à la précision de la mesure et permet de compenser le fait que, par rapport à la cellule de US-A-2005/0121614, le chemin optique du rayonnement entre l'émetteur et le récepteur est plus court pour un encombrement de la cellule comparable.

Le capot 14 présente également, dans l'exemple représenté, une portion 19 reposant sur la paroi 11 de la partie inférieure 1 de la cellule, et des éléments 20, 21, 22, 23 attachés à cette portion 19 qui viennent recouvrir partiellement les récepteurs lorsque le capot 14 est en place.

Des échancrures 24, 25, 26, 27 sont pratiquées à la périphérie du capot 14, de manière à permettre aux gaz à analyser de pénétrer dans les couloirs 7, 8.

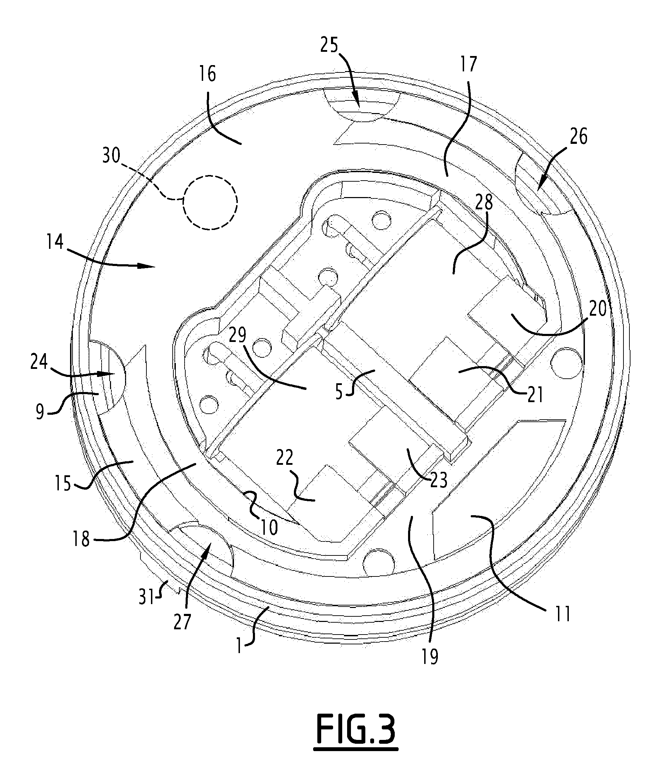

La figure 3 montre en perspective la cellule à l'état assemblé, avec les récepteurs 28, 29 installés dans leurs logements 3, 4. On a également représenté en pointillés 30 la trace de l'émetteur placé dans son logement 2, recouvert par la portion 16 du capot 14. Des ergots 31 permettent d'installer la cellule sur une carte électronique. Les dimensions et emplacements respectifs de l'émetteur et des récepteurs 28, 29 sont optimalement choisis de manière à ce que le filament de l'émetteur se trouve au même niveau que les centres des éléments sensibles des récepteurs 28, 29. L'ensemble peut être recouvert par un métal fritté qui empêche les poussières de pénétrer dans la cellule.

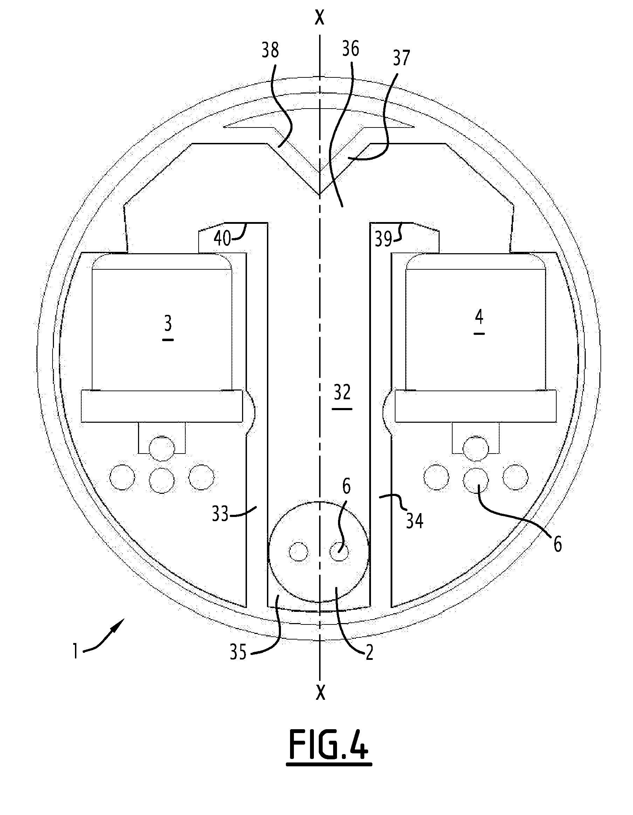

Dans un autre exemple de cellule de mesure selon l'invention, représenté sur les figures 4 à 6, la pièce inférieure 1 de la cellule comporte, comme dans la variante précédente, un logement 2 pour l'émetteur disposé sur un axe de symétrie longitudinal X-X de la cellule et des logements 3, 4 pour les deux récepteurs de référence et de mesure. Des orifices 6 permettent de connecter l'émetteur et les récepteurs à l'appareillage électronique auquel la cellule est intégrée.

Dans cette variante, le rayonnement issu de l'émetteur commence par se propager selon une seule direction dans un couloir rectiligne 32 centré sur l'axe X-X et délimité par deux parois rectilignes 33, 34 parallèles à l'axe X-X. L'émetteur est situé sur l'axe X-X à une extrémité 35 du couloir 32 proche de la périphérie de la pièce inférieure 1. A l'autre extrémité 36 du couloir 32, on trouve un ensemble de parois 37, 38, 39, 40 composées chacune d'une portion plane ou d'une succession de portions planes ; Ces parois divisent le rayonnement issu de l'émetteur en deux parties, de manière à renvoyer ce rayonnement à la fois sur les faces actives respectives du récepteur de référence et du récepteur de mesure avec des chemins optiques de longueurs identiques ayant la forme générale de lignes brisées. Les parois 33, 34, 37, 38, 39, 40 sont, là encore, recouvertes d'un revêtement réfléchissant limitant l'absorption du rayonnement.

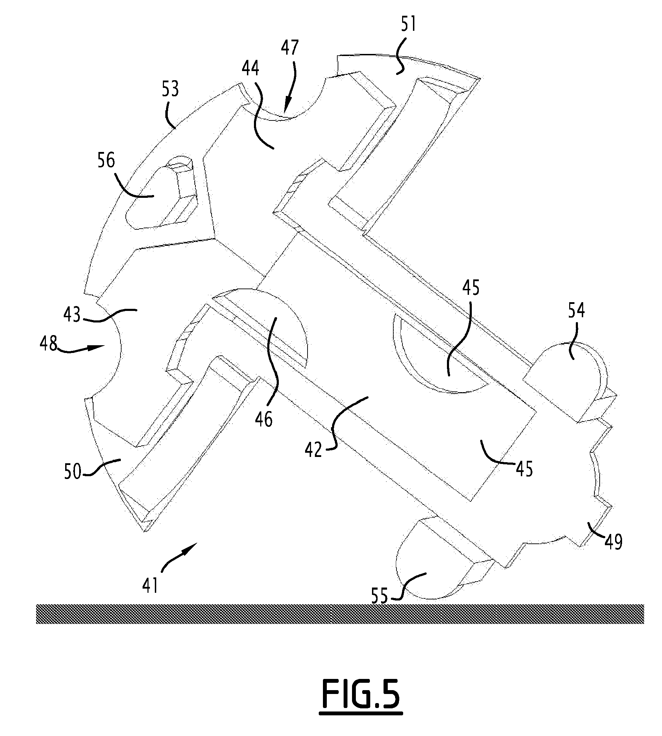

Sur la figure 5 est représenté en perspective et vu de dessous le capot 41 qui vient recouvrir partiellement la pièce inférieure 1 après que l'émetteur et les récepteurs 24, 25 y ont été installés. On y remarque particulièrement la portion 42 qui doit recouvrir le couloir 32 et les portions 43, 44 qui recouvrent chacune les zones délimitées par les parois 37, 38 d'une part et 39, 40 d'autre part. Des échancrures 45, 46, 47, 48 permettent aux gaz à analyser de pénétrer dans le couloir 32.

Selon la variante préférée de l'invention, les épaisseurs de ces portions 42, 43, 44 sont croissantes à partir de la zone 45 coiffant l'émetteur, de manière à diminuer progressivement la hauteur de l'espace dans lequel se propagent le rayonnement issu de l'émetteur et, ainsi, à obtenir une concentration de ce rayonnement favorable à la précision de la mesure. Cela améliore aussi le temps de réponse de l'appareillage intégrant la cellule. En effet, la réduction du volume de l'espace à remplir causée par cette diminution de hauteur par rapport au cas où cette hauteur est constante entraîne un remplissage plus rapide de la cellule. Ce point est, dans la pratique, très important pour l'utilisateur.

Des portions 49, 50, 51, 52, 53 de la périphérie du capot 37 viennent reposer sur la périphérie de la pièce inférieure 1 et des jambes 54, 55, 56 viennent reposer sur le fond de la pièce inférieure 1.

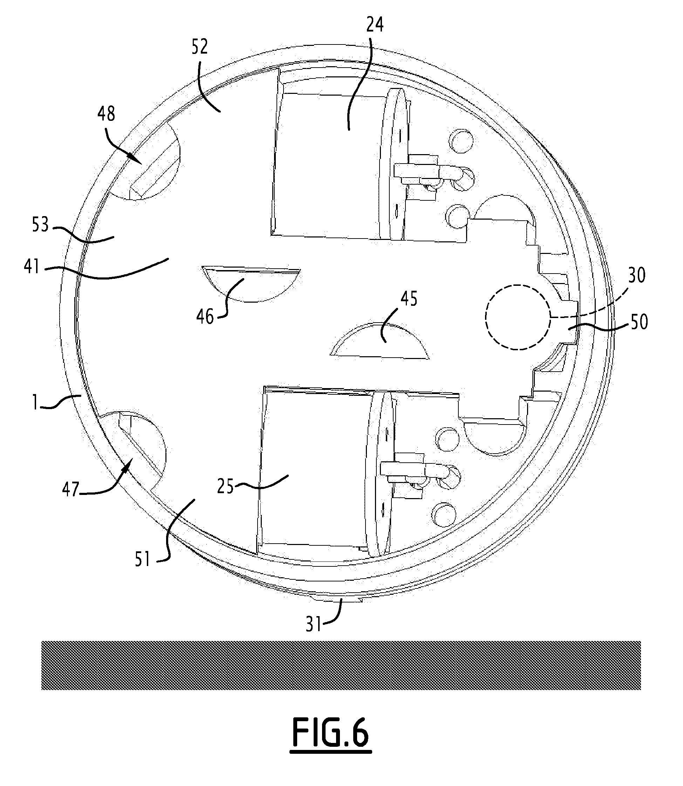

La figure 6 représente la cellule assemblée, avec les récepteurs 24, 25 visibles et la trace 26 de l'émetteur.

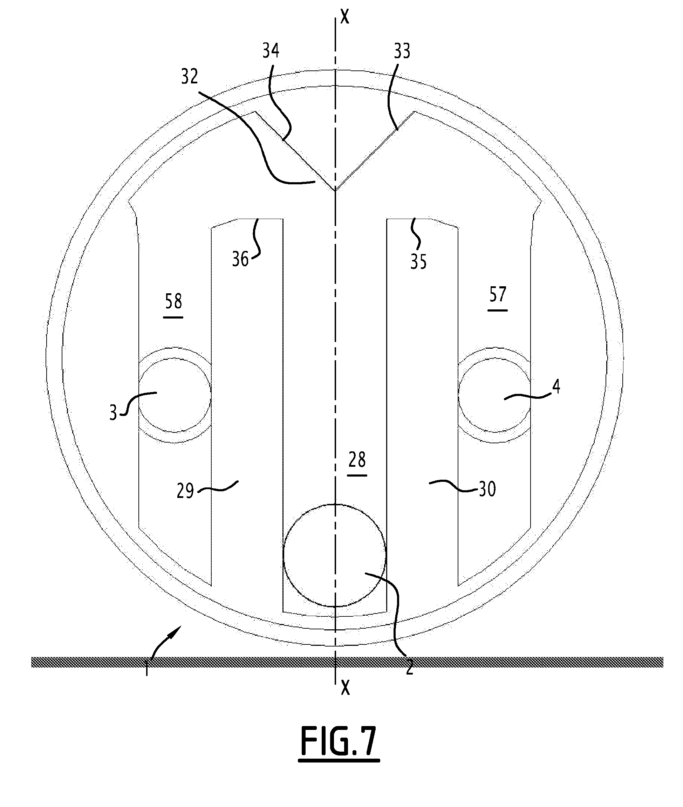

La figure 7 représente la pièce inférieure 1 d'une autre variante de l'invention. Cette variante est fondamentalement similaire à celle des figures 4, 5 et 6, à ceci près que :
- les chemins optiques des rayonnements issus de l'émetteur se terminent par des couloirs rectilignes 57, 58 de longueur significative ;
- les emplacements 3, 4 des récepteurs 24, 25 sont conformés pour recevoir des récepteurs dont les éléments sensibles sont disposés sensiblement horizontalement, et non plus sensiblement verticalement comme dans les variantes précédentes.

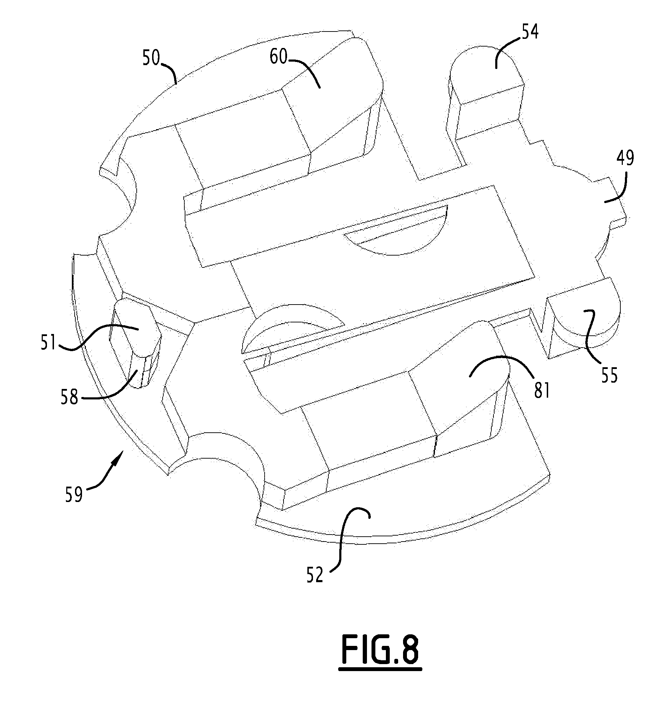

A cet effet, le capot 59, représenté en perspective et en vue de dessous sur la figure 8, présente, dans les zones destinées à avoisiner lesdits récepteurs 24, 25 au dessus des couloirs rectilignes 57, 58, des surfaces 60, 61 orientées obliquement qui réfléchissent les rayonnements en les renvoyant sur les surfaces actives des récepteurs 24, 25. Comme dans les variantes précédentes et selon la mise en oeuvre préférée de l'invention, les différentes portions de la face inférieure du capot 59 qui recouvrent les chemins optiques des rayonnements issus de l'émetteur sont conformées pour obtenir une diminution progressive de la hauteur des couloirs 28, 57, 58 de manière à concentrer le rayonnement et éviter une dégradation de son intensité lumineuse qui pourrait diminuer la précision de la mesure. On retrouve, comme dans le capot 41 de la figure 5, des portions de sa périphérie 49, 50, 51, 52 et des jambes 53, 54, 55 qui assurent le positionnement du capot 58 dans la pièce inférieure 1 de la cellule après l'installation de l'émetteur et des récepteurs 24, 25.

II serait également envisageable de remplacer les deux récepteurs distincts 24, 25 par un élément récepteur unique portant à la fois un élément sensible de mesure et un élément sensible de référence dans la variante des figures 1 à 3.

La cloison 5 pourrait alors être supprimée, ou partir de la face de l'élément récepteur où se trouvent les éléments sensibles.

## Revendications

1. Cellule de mesure pour appareil de détection de la présence d'au moins un gaz d'une espèce donnée dans une atmosphère, comportant un émetteur de rayonnement infra-rouge et au moins un couloir à parois réfléchissantes dans l'infrarouge conduisant ledit rayonnement à deux éléments récepteurs sensibles munis de filtres optiques, dont un élément de compensation ou de référence et un élément de mesure, et un couvercle coiffant ledit ou lesdits couloir(s) et pourvu d'ouvertures permettant la pénétration de ladite atmosphère dans ledit ou lesdits couloir(s), ladite cellule de mesure présentant un axe longitudinal de symétrie sur lequel est disposé ledit émetteur, en ce que lesdits deux éléments récepteurs sensibles étant placés de part et d'autre de cet axe et symétriquement par rapport à lui, les chemins optiques suivis par les rayonnements parvenant auxdits récepteurs étant de longueurs égales et sont non rectilignes, **caractérisé en ce que** l'émetteur est situé à une extrémité d'un couloir rectiligne centré sur l'axe longitudinal de symétrie de la cellule.

2. Cellule de mesure selon la revendication 1, **caractérisée en ce que** lesdits chemins optiques comportent une partie en portion de cercle ou de spirale.

3. Cellule de mesure selon l'une des revendications 1 ou 2, **caractérisée en ce que** la face interne du capot est configurée de manière à réduire progressivement la hauteur dudit ou desdits couloir(s) sur au moins une partie de leur longueur.

4. Cellule de mesure selon l'une des revendications 1 à 3, **caractérisée en ce que** lesdits éléments récepteurs sensibles sont disposés sensiblement horizontalement, et **en ce que** ledit capot présente sur sa face interne au moins une surface oblique renvoyant les rayonnements sur lesdits éléments récepteurs sensibles.
